# EUROPEAN PATENT SPECIFICATION

(11) **EP 1 843 348 B1**
(45) Date of publication and mention of the grant of the patent: **24.10.2012**
(21) Application number: 06701321.9
(22) Date of filing: 18.01.2006
(51) Int. Cl.: G11B 27/10, G06F 3/048, G11B 19/02

(54) **AV PROCESSING DEVICE AND AV PROCESSING METHOD**
AV-VERARBEITUNGSVORRICHTUNG UND AV-VERARBEITUNGSVERFAHREN
DISPOSITIF DE TRAITEMENT AV ET MÉTHODE DE TRAITEMENT AV

(30) Priority: 25.01.2005 JP 2005017376
(43) Date of publication of application: 10.10.2007
(73) Proprietor: JVC KENWOOD Corporation, Kanagawa 221-0022 (JP)
(72) Inventor: KOISO, Hisashi, Tokyo, 1970824 (JP)
(74) Representative: Leinweber & Zimmermann
(86) International application number: PCT/JP2006/301085
(87) International publication number: WO 2006/080321

(56) References cited:
- WO-A-2004/053687
- WO-A-2005/089512
- WO-A1-01/27925
- WO-A2-03/036457
- DE-A1- 10 014 987
- JP-A- 06 242 919
- JP-A- 61 077 184
- JP-A- 2001 006 260
- JP-A- 2002 149 300
- US-A1- 2002 186 252
- US-A1- 2004 100 479
- US-A1- 2004 151 327

## Description

### TECHNICAL FIELD

The present invention relates to an AV (audio and/or video) processing device, an AV processing method and a program whereby a user can display a list part including a desired element by an efficient operation even if there are many elements constituting an AV list.

### BACKGROUND ART

An iPod (trademark of Apple Inc.) can be placed in the pocket of the clothes and carried around by a user at will, and can record many tune files in a 4 - 60 GB internal hard disk device (10,000 tune files for 40 GB hard disk) to play and listen to any tune as appropriate. In order for the user to efficiently find a desired tune from many tunes, the iPod^{™} is provided with a click wheel on its front panel, so that the user may circle the finger over the click wheel to quickly change the tune title displayed on its display unit, and, with the tunes divided into a plurality of hierarchical categories, the user may select a category such as artist, album name and playlist to view a desired group of elements relating to the tune.

On the other hand, a use whereby an iPod^{™} is taken in a vehicle as appropriate, and connected to a car navigation system with AV playback function to play tunes in an internal hard disk device in the iPod^{™}, and output the playback sound from the speaker of the car audio system has been proposed.

In the karaoke machine of Japanese Patent Application Laid-Open No. 2004-234034, a rotating knob (FIG. 3 of Japanese Patent Application Laid-Open No. 2004-234034) to rotationally drive a rotary encoder is provided to select a desired tune from many tunes, and the user operates and rotates the rotating knob with the finger to generate an electrical pulse from the rotary encoder to change the tune titles displayed on the display unit one after another based on the electrical pulse. Further, in FIG. 9 of Japanese Patent Application Laid-Open No. 2004-234034, it is disclosed that a plurality of serial-numbered tunes are collectively displayed on a television screen as a list part.

Japanese Patent Application Laid-Open No. 2002-116933 discloses that tunes are divided into categories and the categories are managed using a tree structure, in order to efficiently find a desired tune from many tunes.

### DISCLOSURE OF THE INVENTION

The click wheel of the iPod^{™} presents no problem when there are only a few tunes, as the number of times that the user circles the finger is not too large, while when the number of tunes is huge, the number of times of circling increases accordingly, increasing fatigue. Further, for example, since the touch display of the car navigation system with AV playback function are not large enough, even if the tunes are divided according to categories such as artist, album name and playlist, when the total number of tunes in each category becomes huge, the list part displayed on the touch display has to be scrolled again and again in order to display the title of the desired tune on the touch display.

When a desired tune is selected from many tunes, as in the case of the operation of the click wheel of the iPod^{™}, the rotating operation knob in the karaoke machine of Japanese Patent Application Laid-Open No. 2004-234034 has to be rotated by a number of rotations corresponding to the number, leading to inefficient operation.

A tune management device of Japanese Patent Application Laid-Open No. 2002-116933 manages tunes based on categories in a tree structure, however, when the number of the tunes in a category becomes huge, the list part relating to a desired tune cannot be called by an efficient user operation.

An object of the present invention is to provide an AV processing device, an AV processing method and a program whereby a list part can be called by an efficient user operation when the desired list part in an AV list having many elements is displayed on a touch display.

An AV processing device according to the present invention comprises list part display means for assigning serial numbers to N elements that constitute an AV list, and displaying the N1 serial-numbered elements in the elements as a list part on a touch display, belt-shaped image display means for using a belt-shaped image to represent the order of the serial-numbered elements, touch position detection means for detecting a user touch position on the belt-shaped image, touch correspondence number calculation means for calculating a number assigned to the user touch position according to the user touch position and N as a touch correspondence number and modification instruction means for instructing the list part display means so as to modify the displayed list part into a list part relating to the element of the N1 serial numbers including the touch correspondence number, and may comprise the following particulars as appropriate.

The AV processing device comprises the belt-shaped image display means for displaying a present number position mark at a position corresponding to the number of the element that is currently selected on the belt-shaped image, wherein the length of the present number position mark in the extension direction of the belt-shaped image becomes smaller as N becomes larger.

The AV processing device comprises the belt-shaped image display means for displaying tick marks on the belt-shaped image, wherein the number of the tick marks increases as N becomes larger.

The AV list is a list relating to tunes that are recorded on an internal hard disk device.

The AV processing device can communicate with a portable music player at will, and the portable music player plays tunes that are recorded on an internal storage device, allowing them to be listened to at will on the portable music player, while at the same time accepting a plurality of predetermined commands from the AV processing device, executing each processing in response to each command, and returning the processing result to the AV processing device, wherein the AV list is a list relating to the tunes that are recorded on the internal storage device in the portable music player.

The AV processing device comprises sending/receiving means for sending to the portable music player a total number information request command whereby the portable music player replies to the AV processing device with the information relating to the total number N, and a list part information request command whereby the portable music player replies to the AV processing device with the list part information relating to the element of the N1 serial numbers including the touch correspondence number, and for receiving the answers to the commands from the portable music player, the touch correspondence number calculation means for causing the sending/receiving means to send the total number information request command and obtaining N based on the answer to the total number information request command from the portable music player, and the list part display means for, in response to the modification instruction from the modification instruction means, causing the sending/receiving means to send the list part information request command relating to the list part including the number relating to the user touch position and modifying the list part based on answer information to the list part information request command from the portable music player.

The element is the title of a tune or the name of a category into which the tunes are divided.

The belt-shaped image is a belt-shaped image with both ends whose one end is a reference position, or a loop-shaped belt-shaped image in which a predetermined circular direction position is a reference position.

The belt-shaped image includes first and second belt-shaped images having a plurality of partitions in the extension direction thereof, wherein all the N elements are assigned to the first belt-shaped image, on the other hand, only the elements having the number assigned to a predetermined area including the user touch position in the first belt-shaped image are assigned to the second belt-shaped image, and the touch position detection means controls the belt-shaped image display means to display the first belt-shaped image for a first user touch of the belt-shaped image, and, to display the second belt-shaped image for a second user touch of the belt-shaped image.

An AV processing method according to the present invention comprises the steps of: assigning serial numbers to N elements that constitute an AV list, displaying the N1 serial-numbered elements in the elements as a list part on a touch display, using a belt-shaped image to represent the order of the serial-numbered elements, detecting a user touch position on the belt-shaped image, calculating a number assigned to the user touch position according to the user touch position and N as a touch correspondence number, and modifying the list part displayed on the touch display into a list part relating to the element of the N1 serial numbers including the calculated touch correspondence number, and may comprise the following particulars as appropriate.

The belt-shaped image includes first and second belt-shaped images having a plurality of partitions in the extension direction thereof, wherein all the N elements are assigned to the first belt-shaped image, on the other hand, only the elements having the number assigned to a predetermined area including the user touch position in the first belt-shaped image are assigned to the second belt-shaped image, and, in response to the detection of the touch position, as a display using the belt-shaped images, the first belt-shaped image is displayed for a first user touch of the belt-shaped image, and the second belt-shaped image is displayed for a second user touch of the belt-shaped image.

There are an AV processing device and a portable music player that can communicate with each other at will, the portable music player plays tunes that are recorded on an internal storage device, allowing them to be listened to at will on the portable music player, while at the same time accepting a plurality of predetermined commands from the AV processing device, executing each processing in response to each command, and returning the processing result to the AV processing device, wherein the AV list is a list relating to the tunes that are recorded on the internal storage device in the portable music player.

A program according to the present invention causes each means in the AV processing device to function, and a computer to achieve each step of the AV processing method.

According to the present invention, on a belt-shaped image on which extension direction positions are assigned to numbers, a user touches an extension direction position corresponding to the number of a desired element, so that a list part including the desired element may be displayed on a touch display, thereby facilitating user operation.

### BRIEF DESCRIPTION OF THE DRAWINGS

FIG. 1 is a general view showing the overview and connection status of an in-vehicle multimedia system and a portable music player;
FIG. 2 is a front view of a color monitor on which a top category screen is displayed;
FIG. 3 is a hierarchy diagram of categories;
FIG. 4 is a front view of the color monitor on which a list part screen of a list including tune titles as its element is displayed;
FIG. 5 is an explanatory diagram of an improved jump bar;
FIG. 6 is an explanatory diagram of the width of a present number position mark on the jump bar;
FIG. 7 is an explanatory diagram of tick marks on the jump bar;
FIG. 8 is a configuration diagram of the hardware of the in-vehicle multimedia system;
FIG. 9 is a functional block diagram of an AV processing device; and
FIG. 10 is a flowchart of an AV processing method.

### BEST MODES FOR CARRYING OUT THE INVENTION

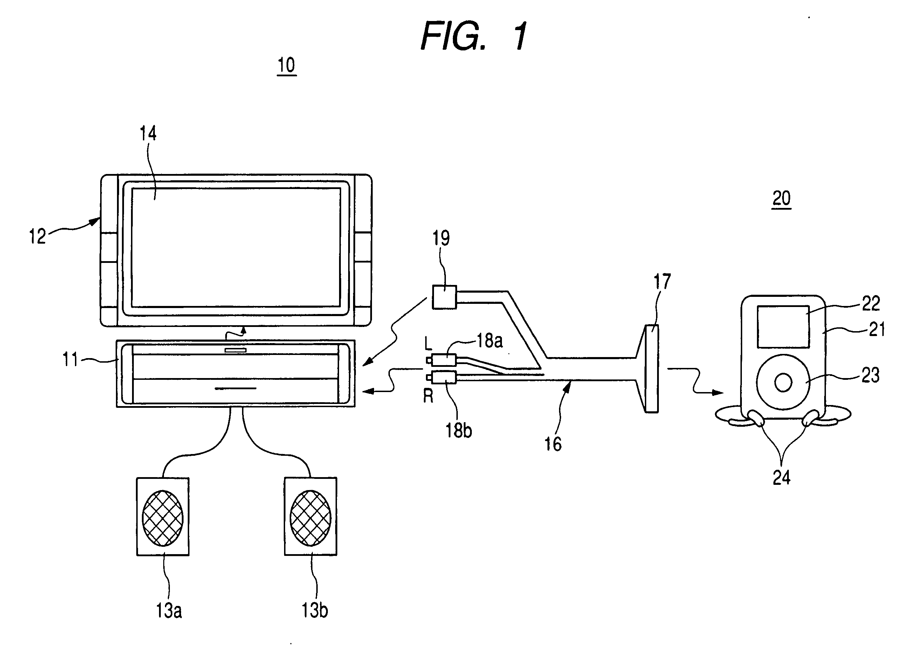

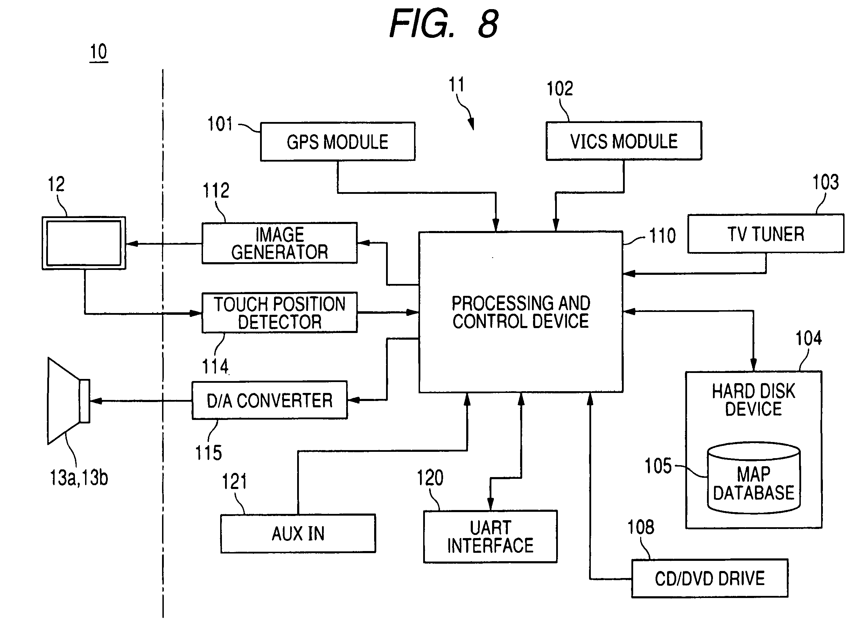

FIG. 1 is a general view showing the overview and connection status of an in-vehicle multimedia system 10 and a portable music player 20. The in-vehicle multimedia system 10 is built into a vehicle and has a main body control device 11, a color monitor 12 and right and left speakers 13a and 13b. The main body control device 11 incorporates a hard disk device having a map database. The main body control device 11 is also provided with a CD/DVD drive 108 (FIG. 8) into which an optical disk such as DVD and CD is inserted to read the data. The color monitor 12 has a touch panel 14 on its front surface.

The portable music player 20, which is iPod^{™} and gigabeat^{™}, for example, has such size and weight that a user can put it on the palm, and place it in the pocket of the clothes and the bag of the user. The portable music player 20 has a main body 21, a liquid crystal display unit 22 and a click wheel 23 (for iPod), which are provided on the upper half and the lower half of the front surface of the main body 21, respectively, and right and left earphones 24, which are connected to the main body 21, and put in the ears of the user. The iPod^{™} is provided with an internal hard disk device, on which a lot of tune data is recorded in the file format of Advanced Audio Coding (AAC) and MP3, and reads and plays the data as appropriate, so that the user can listen to playback sound from the right and left earphones 24.

A cable 16 is provided with a connector 17, which is separatably connected to the main body 21 of the portable music player 20 and has 30 pins, for example, right and left connectors 18a and 18b connected to the external right and left audio signal input terminals 121 (FIG. 8) on the main body control device 11 of the in-vehicle multimedia system 10 and a connector 19 connected to a Universal Asynchronous Receiver Transmitter (UART) and a power connector on the main body control device 11 of the in-vehicle multimedia system 10. The main body control device 11 sends a predetermined command to the portable music player 20 through the UART interface 120 (FIG. 8), and obtains information corresponding to the command from the portable music player 20. The main body control device 11 supplies predetermined power from the connector 19 to the portable music player 20 while the main body control device 11 is being connected to the portable music player 20 through the cable 16 to charge the internal buttery of the portable music player 20.

Predetermined commands are set in the iPod^{™}, and the iPod^{™} executes predetermined processing in response to these commands and returns the processing result to the originator of the commands. In regard to a portable music player 20 such as iPod^{™}, the main body control device 11 uses the commands on the side of the portable music player device 20 to issue instructions to the portable music player 20, and the processing result returned from the portable music player 20 is left as is, or the processing result is processed appropriately, to provide various functions to the user.

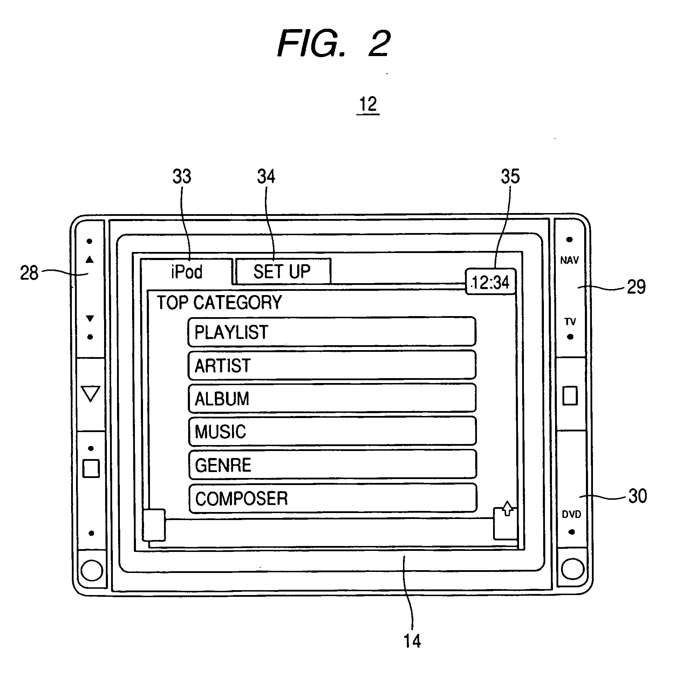

FIG. 2 is a front view of a color monitor 12 on which a top category screen is displayed. Note that an operation key, which is physically provided on the color monitor 12 is called "hard key", and a key displayed on the touch panel 14 as appropriate and touched by the user during operation is called "soft key". For convenience of description, the right and left of the color monitor 12 are defined as the right and left when the color monitor 12 is viewed from the front (front view). On the front surface of the enclosure of the color monitor 12, there are right and left sides, which sandwich the touch panel 14 from both sides, and a volume key 28 is provided on the upper part of the left side of the front surface of the enclosure, so that the user operates the key to increase and reduce the volume of playback sound of tunes. A navigation/television switch key 29 is provided on the upper part of the right side of the front surface of the enclosure, so that the user operates the key to switch the screen of the touch panel 14 between navigation use and television use. A portable music player/DVD switch key 30 is provided on the lower part of the right side of the front surface of the enclosure, so that the user operates the key to switch the screen of the touch panel 14 between DVD use and portable music player 20 use.

A top category, which is defined for iPod^{™}, includes six categories: playlist, artist, album, music, genre and composer, which constitute one list, and are ordered in a column on the top category screen. An iPod tag 33, a setup tag 34 and a present time display window 35 are placed on the upper side on the top category screen. The top category screen is displayed when the iPod tag 33 is touched on the touch panel 14. The user touches an area in a desired category among the categories of playlist, artist, album, music, genre and composer when the user wants to switch the screen of the touch panel 14 to the screen of a group of categories of the next lower hierarchy.

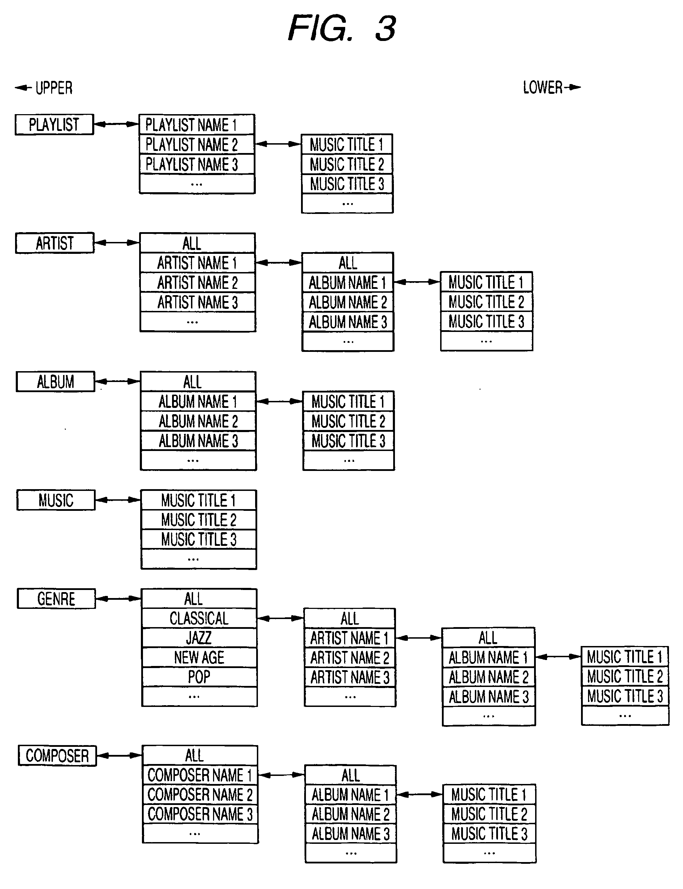

FIG. 3 is a hierarchy diagram of categories. The hierarchical structure of the categories in FIG. 3 is defined in the portable music player 20. Each category group or each music title group (music title = tune title) in the hierarchical structure of the categories constitutes a list, and lists constitute a tree structure. Each category on the top category is the top hierarchy in each tree structure, and every list corresponding to a leaf in each tree structure has a music title as its element. In addition, a category defined as "all" exists in each list except for the list of the playlist name and the list of the music title. If the user selects "all", the list consisting of music titles in all categories in the lists including the "all" would be selected. The same music title may belong to a plurality of categories. Tunes recorded on the hard disk device in the portable music player 20 are assigned serial numbers in the order in which the tunes are recorded, beginning with 1 (hereinafter referred to as "recording order number").

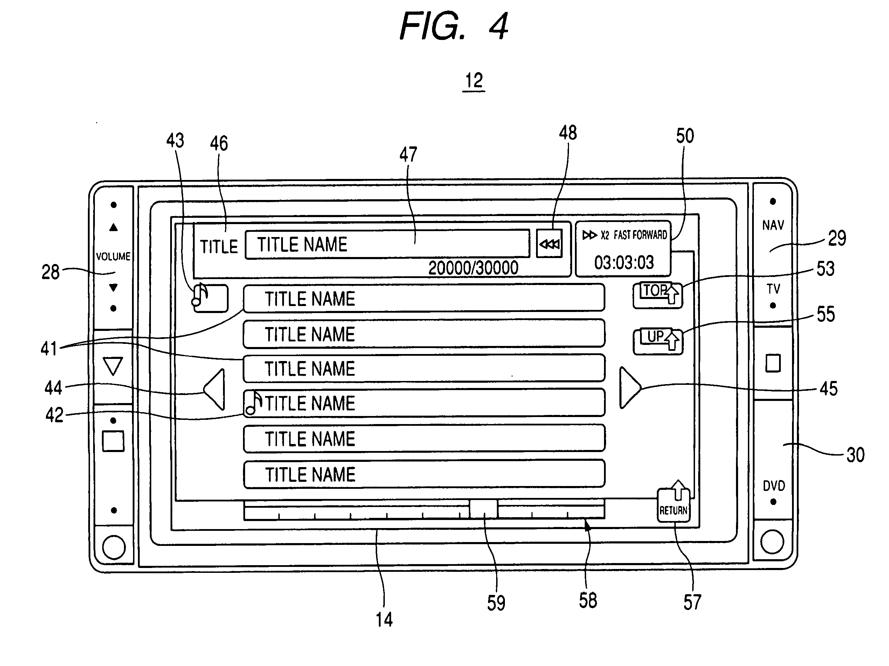

FIG. 4 is a front view of the color monitor 12 on which a list part screen of a list including tune titles as its element is displayed. The list relating to FIG. 4 is a list that is a leaf in the tree structure in FIG. 3 and is for music titles, or a list displayed when "all" is selected. On the screen of the list part of the list including tune titles as its element, when the user moves to the list of the leaf in FIG. 3, temporary serial numbers beginning with 1 are assigned to each element constituting the list for each list, for convenience of management. The magnitude relation of the temporary serial numbers assigned on each list corresponds to that of the recording order number in the portable music player 20. Since the touch panel 14 is small in size, the whole of the list cannot be displayed on the touch panel 14, and only the tune titles 41 of the tunes having six temporary serial numbers among the tune titles belonging to the list which is currently selected are displayed in a column on the touch panel 14 as a list part. When the user touches one of the tune titles 41 in the column that are currently displayed on the touch panel 14, the playback of the tune of the touched tune title 41 is started.

Each soft key in the list part screen for the tune titles 41 in FIG. 4 will be described. A return to list part for currently playing tune title key 43 is located at the level of the upper edge of the column of the tune title 41, and is touched by the user when the user wants to return from the list part screen where the tune title of the currently playing tune (hereinafter, referred to as "tune G") is not displayed to the list part screen containing the tune G. Note that the display screen in FIG. 4 represents the list part screen including the tune G, and a musical note 42 is put on the tune title 41 of the tune G (tune title 41 in the fourth line). Since the tune title 41 of the tune G is displayed on the list part screen in FIG. 4, the screen does not change even if the user touches the return to list part for currently playing tune title key 43. Although a total of six tune titles 41 are placed in a column, the temporary number assigned to each tune title 41 increases one by one when moving downward one line after another. A skip to previous page key 44 and a skip to next page key 45 are placed on the left and right of the column of the tune title 41, respectively, and are touched by the user when the user wants to display the list part of the previous page and the next page (subsequent page) as the list part of the currently displayed page.

A currently playing tune window 46 and a time code window 50 are placed on the upper left and upper right of the column of the tune title 41, and the currently playing tune window 46 includes a tune title display unit 47 and a text scroll key 48. On the tune title display unit 47, the tune title of the tune G is displayed. The currently playing tune window 46 and the time code window 50 are always displayed on the front surface of a screen while the tune is being played, on the other hand, the list part screen of the tune title 41 shifts to a list part screen which does not include the tune title of the tune G when the user touches the skip to previous page key 44 or the skip to next page key 45 as appropriate, or shifts to a list part screen relating to a category whose element is not the tune title when the user presses or touches the hard key or soft key as appropriate. A text scroll key 48 is touched by the user when the user want to display the end of the tune title for a predetermined period of time when the end of the tune title cannot be displayed on the tune title display unit 47 because the tune title is long. The time code window 50 displays the time code of the tune G.

A return to top category key 53 and an up one level key 55 are placed above the skip to next page key 45, in a relationship of respectively above and below, relative to each other. The return to top category key 53 is touched by the user when the user returns directly to the screen of the top category (FIG. 2). The up one level key 55 is touched by the user when the user returns to the list in the one upper hierarchy relative to the list whose list part is currently displayed. A return to large menu key 57 is placed on the lower right corner of the touch panel 14, and is touched when the user returns to a large menu screen (not shown). The large menu is established as a screen that is initially displayed on the color monitor 12 when the portable music player 20 is connected to the in-vehicle multimedia system 10, and displays three categories (e.g. file name, artist name and album name) that the user frequently uses, in addition to the name of the portable music player 20 which is being connected this time. Various soft keys, including repeat one tune, scan, random tunes (a plurality of tunes are randomly queued and played in the order in which they are in the queue), random albums (a plurality of albums are randomly queued, and selected in the order in the queue, and the tunes in each album are played in the order in which the tunes are recorded), quick rewind, fast forward, skip upward, play, stop and skip downward are provided on the large menu.

A jump bar 58 is displayed on the lower side of the column of the tune title 41, and has tick marks in the direction of the axis at regular intervals (e.g. tick marks every 1/10 relative to the length L of the jump bar 58). A part in the longitudinal direction of the jump bar 58 is touched by the user when the user selects a desired element among many elements in the list assigned to the category that is currently selected to display the list part including the element on the touch panel 14. Although the jump bar 58 in FIG. 4 is to select a tune title 41, instead of the tune title 41, the jump bar 58 may be applied to a case where a user efficiently selects and displays on the touch panel 14 a desired element in the list of artist names, the list of album names and the list of genre names in FIG. 3.

A present number position mark 59 is displayed at a position on the jump bar 58 to represent the relative position, among all the temporary numbers, of the temporary number of the currently playing tune. The currently playing tune is the 20000^{th} tune in 30000 tunes as shown in the currently playing tune window 46, and the axis direction position of the present number position mark 59 in the jump bar 58 is at a position of (2/3)xL from the left end of the jump bar 58, where L presents the entire length of the jump bar 58. When the user touches the jump bar 58, in addition to the every 1/10 tick marks on the jump bar 58, the user can know exactly the location of the desired number using as a measure the position of the present number position mark 59 on the jump bar 58 and the temporary number on the currently playing tune window 46.

For the jump bar 58, a number is assigned to each horizontal axis direction position, considering a horizontal axis extending from the left end to right direction and taking the left end as the origin with the axis direction position = 0. In other words, as described above, temporary serial numbers beginning with 1 for each list are assigned to the elements in the list. A maximum temporary number in the currently selected list is defined as N. The jump bar 58 is divided into N equal-length partitions over the entire length, and y4 on the jump bar 58 is sequentially assigned to temporary numbers 1, 2, ..., N from the left end to the right end of the jump bar 58. Thus each element is assigned to Lx(N1/N)^{th} y4 where the temporary number is N1, and the length of the jump bar 58 is L. Accordingly, in principle, when the user touches the location of axis direction position L1, the list part including the N×(L1/L)^{th} element is displayed on the touch panel 14. When N becomes a large number to some extent, the length range L/N allocated per element becomes short, such that the user may sometimes not be able to touch the exact location assigned to the desired element, and touch a location that is slightly off. In this case, instead of the portion of the list the user desires, a different neighboring portion of the list before or after is displayed on the touch panel 14, however, the user touches the skip to previous page key 44 or the skip to next page key 45 as appropriate to display the desired list part on the touch panel 14, or tries to touch the jump bar 58 repeatedly until the desired list part is displayed on the touch panel 14.

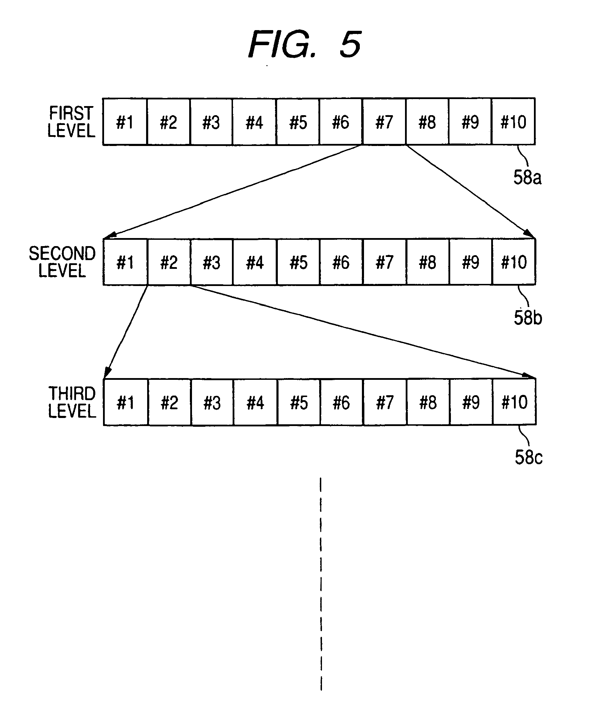

FIG. 5 is an explanatory diagram of an improved jump bar 58. As described above, as the N becomes large, the length range L/N allocated per element on the jump bar 58 becomes short, and also factoring finger width, therefore, it is difficult to identify the touch location on the jump bar 58 with the accuracy of L/N. The improved jump bar 58 is displayed on the touch panel 14 in levels by multi-level jump bars 58a, 58b, 58c, .... The number of levels is an appropriate natural number, e.g. 2, in which case, only the jump bars 58a and 58b are present, but not the jump bar 58c onward.

An appropriate integer C is set based on the length L of the jump bar 58 and the finger width of the user. In FIG. 5, for the sake of convenience, C = 10 is assumed, however, another integer (e.g. 2 and 100) larger than one may be selected as C. C equal-length partitions are set on the jump bars 58a, 58b, 58c, ... in the longitudinal direction. The jump bars 58a, 58b, 58c, ... are jump bars 58 displayed respectively the first time, the second time, the third time ..., by the user, are the first level, the second level, the third level, ... in the order of display, and are allocated C equal-length partitions of L/C in the longitudinal direction, and each equal-length partition is assigned the serial number part of an element in the list. The jump bar 58a corresponds to N temporary number ranges, the jump bar 58b corresponds to N/C temporary number ranges, the jump bar 58c corresponds to N/C², ... and so on. For example, on the jump bar 58a, with respect to the number of the element, each equal-length partition is assigned the number range 1 to (N/C), (N/C)+1 to 2×(N/C), 2×(N/C)+1 to 3×(N/C), ..., and (C-1)×(N/C)+1 to N, in order from the equal partition on the left.

When the user touches a predetermined partition on the jump bar 58a, the jump bar 58b corresponding to the touch partition appears instead of the jump bar 58a. In FIG. 5, it is assumed that, on the jump bar 58a, the seventh equal-length partition from the left is touched, and, on the jump bar 58b, the second equal-length partition from the left is touched. If the user touches the seventh partition from the left on the jump bar 58a, for example, then, on the jump bar 58b, the number range assigned to the seventh partition of the jump bar 58a is extended to length L. In this manner, the later the jump bar 58 appears, the larger the length allocated per unit number range becomes; for the jump bar 58b, the length allocated to the unit number range becomes C times the length of the jump bar 58a, and for the jump bar 58c, the length allocated to the unit number range becomes C² times the length of the jump bar 58a. For example, when the number of elements is 10000, and C = 10, by the third touch by the user, the jump bar 58 (= jump bar 58d) in which each equal-length partition is assigned to one tune appears. By using such the multi-level jump bar 58 , even if N is huge, an element of the desired number can be selected with a low number of touch operations and with high accuracy.

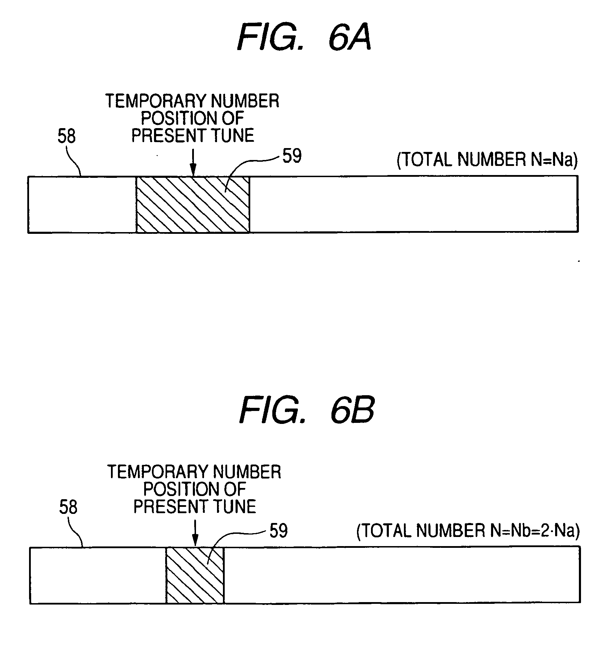

FIG. 6 is an explanatory diagram of the width of a present number position mark 59 on the jump bar 58. As described above, on the jump bar 58, temporary numbers 1 to N are assigned to each equal-length partition in order from the left end to the right end thereof. In addition, the present number position mark 59 represents the location assigned to the temporary number of the currently selected tune on the jump bar 58. In regard to the present number position mark 59, the length of the jump bar 58 in the extension direction (hereinafter referred to as "width") is reduced as N increases. For example, in FIGS. 6 (a) and (b), the width of the present number position mark 59 is inversely proportional to the total number N, and the widths of the present number position mark 59 of (a) and (b) are L/Na and L/(2×Na), respectively, where Na and Nb (= 2×Na) are the total numbers N of tunes in a list, in FIGS. 6 (a) and (b), respectively. The user can recognize a location where the temporary number of the currently selected tune exists in the temporary numbers of all the tunes in the present list, based on the relative position of the present number position mark 59 on the jump bar 58, and also easily recognize the total number of the tunes, based on the width of the present number position mark 59.

As another example of the width of the present number position mark 59, the width of the present number position mark 59 = (M×L)/N where the number of the tune titles in the list part is M (M = 6 in FIG. 4). In addition, if N becomes a large natural number, the width of the present number position mark 59 becomes so narrow that it is difficult for the user to see, therefore, a minimum value may be set on the width of the present number position mark 59.

The equal-length partition on the jump bar 58 may be used to display the width of the present number position mark 59. In other words, the jump bar 58 consists of N equal-length partitions, for example, these equal-length partitions are assigned to the temporary numbers 1, 2, ..., N in the order from the left end to the right end thereof, and the width of each equal-length partition is L/N. Therefore, on the jump bar 58, if the present number position mark 59 having a width spanning the entire width of the equal-length partition is displayed on equal-length partition assigned to the temporary number of the currently selected tune, the width of the present number position mark 59 becomes L/N, and is reduced as N increases.

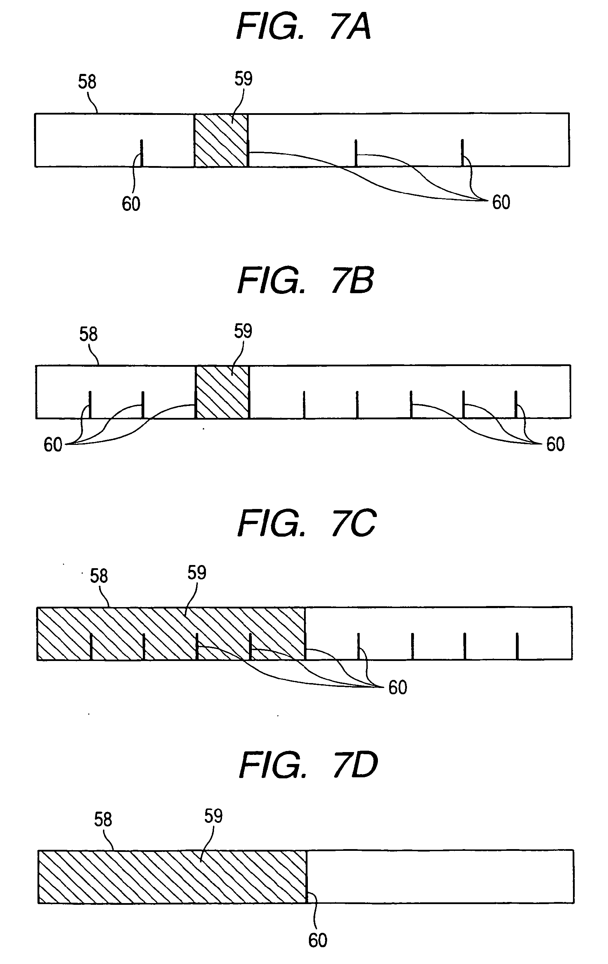

FIG. 7 is an explanatory diagram of tick marks 60 on the jump bar 58. For N = 10, FIGS. 7 (a) and (b) show examples of jump bars 58 when the number of tick marks 60 is five and ten, respectively. Although a plurality of tick marks 60 are displayed on the jump bar at regular intervals, when the number of the tick marks 60 is fixed, the tick marks are rough relative to the present number position mark 59 as shown in (a), and it is difficult for the user to recognize the temporary number position on the jump bar 58. As shown in (b), when the number of the tick marks 60 is controlled according to N so that the number of the tick marks 60 increases as N increases, it becomes easy for the user to recognize the position of the temporary number of the tune title relating to the present number position mark 59 in all the tune titles.

FIGS. 7 (c) and (d) show examples of the jump bar 58 when the width of the present number position mark 59 increases as N is reduced, with respect to FIG. 7 (b). In FIGS. 7 (c) and (d), N = 2 for the purpose of an easier understanding of what is meant. The width of the present number position mark 59 is increased and reduced according to N, and is L/N. In FIG. 7 (c), even if N is 2, the number of tick marks 60 is fixed, which is 8 except for both ends of jump bar 58. As compared with this, in FIG. 7 (d), the number of tick marks 60 is set to N-1, therefore, it is easy to recognize the correspondence between the tick marks 60 and the temporary number of the present number position mark 59.

FIG. 8 is a configuration diagram of the hardware of the in-vehicle multimedia system 10. Note that everything in FIG. 8 is an element of the main body control device 11, except for the color monitor 12 and the speakers 13a and 13b. A GPS module 101 detects the position of a vehicle based on an electric wave from a GPS satellite. A Vehicle Information and Communication System (VICS) module 102 receives traffic congestion information from FM simulcast or the like. A TV tuner 103 outputs video and audio signals relating to a TV broadcast wave of VHF and UHF. A hard disk device 104 includes a map database 105, and allows tune data or the like dubbed from a CD or the like to be written to and read from as appropriate. A CD/DVD drive 108 allows data for the map database 105 to be read at will from a predetermined CD-ROM, and can read from music CDs and DVDs data of tunes and movies for playback. A processing and control device 110 includes a CPU, receives data and signals from the GPS module 101, the VICS module 102, the TV tuner 103, the hard disk device 104 and the CD/DVD drive 108, and executes various processing. An image generator 112 generates an image display signal based on data entered from the processing and control device 110, and outputs the signal to the color monitor 12. The user touches with the finger a predetermined position on the touch panel screen of the color monitor 12 on which menus and keyboards are displayed when the user gives instructions and inputs to the main body control device 11. A touch position detector 114 detects the position where the user touched with the finger, and outputs it to the processing and control device 110. A D/A converter 115 receives a digital audio signal from the processing and control device 110, converts the signal into an analog audio signal, and outputs the signal to the speakers 13a and 13b.

The main body control device 11 also has the UART interface 120 and the external right and left audio signal input terminals 121. As described above with reference to FIG. 1, when the portable music player 20 is connected to the main body control device 11, the connector 19 of the cable 16 is connected to the UART interface 120, and the connectors 18a and 18b are connected to the external right and left audio signal input terminal 121. The main body control device 11 can not only play tunes and videos recorded on CD-AUDIO, DVD-AUDIO and DVD-VUDEO, when they are set in the CD/DVD drive 108, it can also emit, from the speakers 13a and 13b, the tune playback sound entered from the portable music player 20 into the external right and left audio signal input terminals 121, as appropriate.

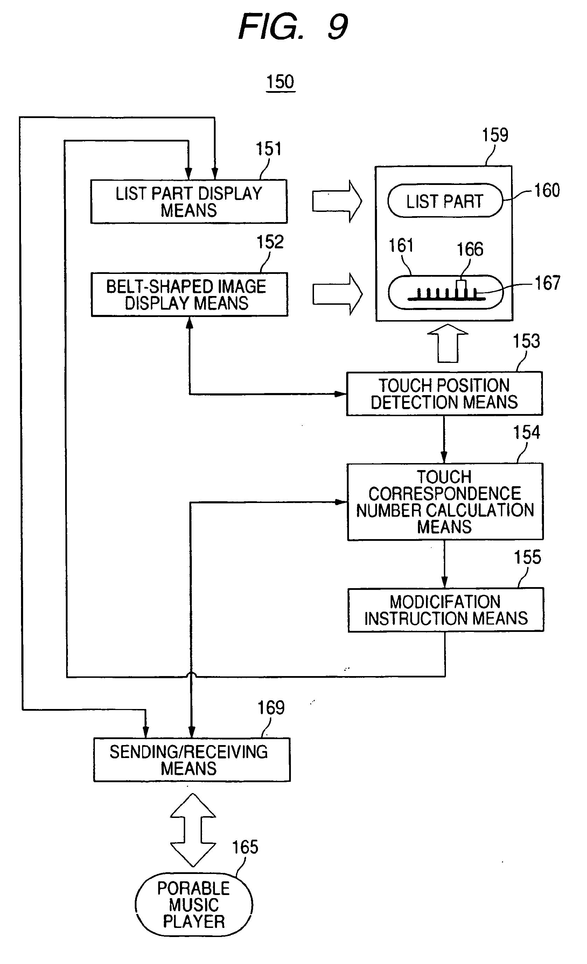

FIG. 9 is a functional block diagram of an AV processing device 150. The AV processing device 150 has list part display means 151, belt-shaped image display means 152, touch position detection means 153, touch correspondence number calculation means 154 and modification instruction means 155. The list part display means 151 assigns serial numbers to all the elements that constitute the AV list, and displays as a list part 160 on a first display area on the touch display 159, N1 (N1 < N) serial numbered elements among all the elements, where the total number of all the elements is N. On a belt-shaped image 161, the belt-shaped image display means 152 sets a reference position and an extension direction position as a length from the reference position in the extension direction of the belt-shaped image 161, the larger the extension direction position is, the larger the number of the element assigned, and displays the belt-shaped image 161 on a second display area on the touch display 159.

The touch position detection means 153 detects a user touch position on the belt-shaped image 161. The touch correspondence number calculation means 154 calculates a number assigned to the user touch position according to the user touch position and N as a touch correspondence number. The modification instruction means 155 instructs the list part display means 151 so as to modify a list part 160 displayed on the list part display means 151 into a list part 160 relating to the element of the N1 serial numbers including the touch correspondence number.

An example of the AV processing device 150 is the above main body control device 11. The AV processing device 150 is not limited to in-vehicle use, but may also be installed in homes and offices. The AV processing device 150 is typically a music list processing device and a music player. An example of the touch display 159 is the color monitor 12 in FIG. 1. The first and second display areas are display areas that typically do not overlap even partially, however, they may partially overlap slightly. The belt-shaped image 161 is a belt-shaped image with both ends whose one end is a reference position, or a loop-shaped image on which a predetermined circular direction position is a reference position, for example. The belt-shaped image 161 is not limited to those extending in a linear fashion, but includes those extending in curved and zigzag fashions. The belt-shaped image 161 may be circular, that is, a shape with no ends. On the belt-shaped image 161 linearly extending from side to side, for example, a reference position is at the left end, and an extension direction position means a distance from the reference position toward the right. In the circularly extending belt-shaped image 161, for example, when the circular shaped belt-shaped image 161 is likened to a clock, a reference position is 0 o'clock, and an extension direction means clockwise direction. An example of the list part 160 is a column of the tune title 41 in FIG. 4. A purpose of an element in the list part 160 is for the user to select and touch the element. When the element is a tune title, the user touches a desired tune title in the list part 160 to start playing the tune of the tune title.

In the belt-shaped image 161, the larger the number of an element, the larger the extension direction position assigned, therefore, the user can efficiently determine the extension direction position that is assigned to a desired number. In this manner, the user can efficiently and quickly display the list part 160 relating to the element that has the desired number on the touch display 159 even if the list has huge elements.

The AV processing device 150 will be described in more detail.

In the AV processing device 150 having the improved present number position mark 166, the temporary numbers of all the elements are serial numbers from 1 to N. The belt-shaped image display means 152 displays the belt-shaped image 161 with the present number position mark 166. On the belt-shaped image 161, the present number position mark 166 is displayed on the extension direction position assigned to the temporary number of the currently selected element. The length of the present number position mark 166 in the extension direction on the belt-shaped image 161 becomes small as N increases.

An example of the belt-shaped image 161 is the present number position mark 59 (FIG. 6). When the entire length of the belt-shaped image 166 is L, the length of the present number position mark 166 is L/N, for example. The user can intuitively recognize N based on the length of the present number position mark 166, thereby it is easy for the user to recognize N from the belt-shaped image 161.

In the AV processing device 150 having improved tick marks 167, the temporary numbers of all the elements are also serial numbers from 1 to N. The belt-shaped image display means 152 displays, on the belt-shaped image 161, the present number position mark 166 in the extension direction position assigned to the temporary number of the currently selected element, and the tick marks 167. The tick marks 167 is displayed with the tick marks assigned to a plurality of predetermined extension direction positions on the belt-shaped image 161. The number of the tick marks 167 increases as N becomes larger.

An example of the tick marks 167 is the tick marks 60 in FIGS. 7 (b) and (d). The number M of the tick marks 167, for example, may be N = M when N is small, and, may be proportional to N when N is large. In this manner, it becomes easy for the user to recognize the relative position, among all the temporary numbers, of the temporary number of the present number position mark 166.

The AV list means a list relating to tune numbers recorded on an internal hard disk device. An example of the internal hard disk device is the hard disk device 104 in FIG. 8. The list relating to a tune includes categories for tune, for example, lists relating to playlist, artist, album, music, genre and composer. That is, the element means the title of a tune or the name of a category into which the tunes are divided.

The AV processing device 150 can communicate with a portable music player 165 at will. The portable music player 165 plays tunes that are recorded on the internal storage device, allowing them to be listened to at will on the portable music player 165, while at the same time accepting a plurality of predetermined commands from the AV processing device 150, executing each processing in response to each command, and returning the processing result to the AV processing device 150. The AV list means a list relating to tunes that are recorded on the internal storage device in the portable music player 165. An example of the portable music player 165 is the portable music player 20 in FIG. 1, and the portable music player 20 alone allows tunes to be played and listened to. The internal storage device in the portable music player 165 is not limited to an internal hard disk device, but may include other storage devices such as IC memory.

The AV processing device 150 also has sending/receiving means 169. The sending/receiving means 169 sends to the portable music player 165 a total number information request command whereby the portable music player 165 replies to AV processing device 150 with the information relating to the total number N, and a list part information request command whereby the portable music player 165 replies to the AV processing device 150 with the list part information relating to the element of N1 serial numbers including the touch correspondence number, and receives the answers to the commands from the portable music player 165. In response to it, the touch correspondence number calculation means 154 causes the sending/receiving means 169 to send the total number information request command, and obtains N based on the answer to the total number information request command from the potable music player 165. In addition, in response to the modification instruction from the modification instruction means 155, the list part display means 151 causes the sending/receiving means 169 to send the list part information request command relating to the list part 160 including the number relating to the user touch position, and modifies the list part 160 based on the answer information to the list part information request command from the portable music player 165.

The communication between the AV processing device 150 and the potable music player 165 includes communication through a cable, through a direct USB connection without a cable, and by radio. The user can listen to tunes as elements stored in the internal storage device in the portable music player 165 through the speakers on the side of the AV processing device 150 through user operation in the AV processing device 150, although to the portable music player 165, the AV processing device 150 is an externally connected equipment.

The belt-shaped image 161 includes first and second belt-shaped images. The first and second belt-shaped images have a plurality of partitions in the extension direction thereof, and all the N elements are assigned to the first belt-shaped image. On the other hand, only the elements having the number assigned to the extension direction position in a partition area including the user touch position in the first belt-shaped image are assigned to the second belt-shaped image. The touch position detection means 153 controls the belt-shaped image display means 152 to display the first belt-shaped image for a first user touch of the belt-shaped image 161, and, to display the second belt-shaped image for a second user touch of the belt-shaped image 161.

The partitions in the first and second belt-shaped images are typically equal-length partitions. An example of the first and second belt-shaped images are the jump bars 58a and 58b in FIG. 5. As N becomes huge, the length in the extension direction allocated to each number on the belt-shaped image 161 is reduced, therefore, it becomes difficult for the user to touch precisely. Limited to the number range assigned to the partition touched by the user on the first belt-shaped image, the entirety of which can be selected, a second belt-shaped image is provided, in which the length in the extension direction allocated per number has been increased. The user can select exactly the element having a desired number from the belt-shaped image 161, even though the number of times of touch of the belt-shaped image 161 increases in order to select the desired number.

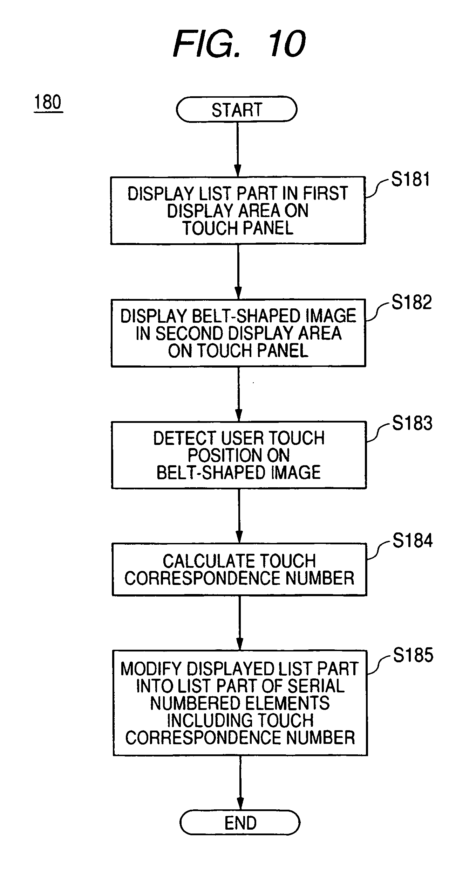

FIG. 10 is a flowchart of an AV processing method 180. In S181, serial numbers are assigned to all the elements that constitute an AV list, and, as a list part 160 on a first display area on the touch display 159, N1 (N1 < N) serial numbered elements are displayed among all the elements, where the total number of all the elements is N. On the belt-shaped image 161, a reference position and an extension direction position which is the length of the belt-shaped image 161 from the reference position in the extension direction are set. In S182, the larger the extension direction position is, the larger the number of the element assigned, and the belt-shaped image 161 is displayed on the second display area on the touch display 159. In S183, the user touch position on the belt-image 161 is detected. In S184, a number assigned to the user touch position is calculated according to the user touch position and N as a touch correspondence number. In S185, the list part 160 displayed on the first display area is modified into the list part 160 relating to the element of the N1 serial numbers including the touch correspondence number.

The AV processing method 180 will be described in more detail.

The belt-shaped image 161 includes first and second belt-shaped images having a plurality of partitions in the extension direction thereof, all the N elements are assigned to the first belt-shaped image, on the other hand, only the elements having the number assigned to the extension direction position in the partition area including the user touch position in the first belt-shaped image are assigned to the second belt-shaped image. In S182, the first belt-shaped image is displayed for a first user touch of the belt-shaped image 161, and the second belt-shaped image is displayed for a second user touch of the belt-shaped image 161. The AV list in the AV processing method 180 means a list relating to tunes that are recorded on the internal storage device in the portable music player 165.

### INDUSTRIAL APPLICABILITY

The present invention is also achieved as a program. The program causes a computer to function as each means in the AV processing device 150. Alternatively, the program causes the computer to execute each step of the AV processing method 180.

## Claims

1. An AV processing device which is communicatively connected to a portable music player, the AV processing device comprising:
list part display means for assigning serial numbers to N elements that constitute an AV list associated to music tunes recorded on an internal storage device of the portable music player, and displaying N 1 serial-numbered elements of the elements as a list part on a touch display, where N1 is less than N;
belt-shaped image display means for using a belt-shaped image to represent the order of the serial-numbered elements and a relative position of a number of a tune being currently played, the belt-shaped image having tick marks in the direction of the axis thereof at regular intervals;
touch position detection means for detecting a user touch position on the belt-shaped image;
touch correspondence number calculation means for calculating a number assigned to the user touch position according to the user touch position and N as a touch correspondence number; and
modification instruction means for instructing the list part display means so as to modify the displayed list part into a list part relating to the element of the N1 serial numbers including the touch correspondence number,
wherein the belt-shaped image includes first and second belt-shaped images having a plurality of partitions in the extension direction thereof, wherein all the N elements are assigned to the first belt-shaped image, on the other hand, only the elements having a number assigned to a predetermined area including the user touch position in the first belt-shaped image are assigned to the second belt-shaped image, and
wherein the touch position detection means controls the belt-shaped image display means to display the first belt-shaped image for a first user touch of the belt-shaped image, and, to display the second belt-shaped image for a second user touch of the belt-shaped image.

2. The AV processing device according to claim 1, wherein the belt-shaped image display means for displaying a present number position mark at a position corresponding to the number of the element that is currently selected on the belt-shaped image, wherein the length of the present number position mark in the extension direction of the belt-shaped image becomes smaller as N becomes larger.

3. The AV processing device according to claim 1, wherein the number of the tick marks increases as N becomes larger.

4. The AV processing device according to claim 1, wherein the AV list is a list relating to tunes that are recorded on an internal hard disk device.

5. The AV processing device according to claim 1, wherein the portable music player plays tunes that are recorded on an internal storage device, allowing them to be listened to at will on the portable music player, while at the same time accepting a plurality of predetermined commands from the AV processing device, executing each processing in response to each command, and returning the processing result to the AV processing device, and
wherein the AV list is a list relating to the tunes that are recorded on the internal storage device in the portable music player.

6. The AV processing device according to claim 5, further comprising:
sending/receiving means for sending to the portable music player a total number information request command whereby the portable music player replies to the AV processing device with information relating to the total number N, and a list part information request command whereby the portable music player replies to the AV processing device with list part information relating to the element of the N 1 serial numbers including the touch correspondence number, and for receiving the answers to the commands from the portable music player;
wherein the touch correspondence number calculation means causes the sending/receiving means to send the total number information request command and to obtain N based on the answer to the total number information request command from the portable music player; and
wherein the list part display means responds to the modification instruction from the modification instruction means, to cause the sending/receiving means to send the list part information request command relating to the list part including the number relating to the user touch position and to modify the list part based on answer information to the list part information request command from the portable music player.

7. The AV processing device according to claim 1, wherein the element is the title of a tune or the name of a category into which the tunes are divided.

8. The AV processing device according to claim 1, wherein the belt-shaped image is a belt-shaped image with both ends whose one end is a reference position, or a loop-shaped belt-shaped image in which a predetermined circular direction position is a reference position.

9. An AV processing method to be performed by an AV processing device which is communicatively connected to a portable music player, the AV processing method comprising the steps of:
assigning serial numbers to N elements that constitute an AV list associated to music tunes recorded on an internal storage device of the portable music player, and displaying N1 serial-numbered elements of the elements as a list part on a touch display, where N1 is less than N;
using a belt-shaped image to represent the order of the serial-numbered elements and a relative position of a number of a tune being currently played, the belt-shaped image having tick marks in the direction of the axis thereof at regular intervals;
touch position detecting for detecting a user touch position on the belt-shaped image; and
calculating a number assigned to the user touch position according to the user touch position and N as a touch correspondence number; and modifying the list part displayed on the touch display into a list part relating to the element of the N 1 serial numbers including the calculated touch correspondence number,
wherein the belt-shaped image includes first and second belt-shaped images having a plurality of partitions in the extension direction thereof, and all the N elements are assigned to the first belt-shaped image, on the other hand, only the elements having a number assigned to a predetermined area including the user touch position in the first belt-shaped image are assigned to the second belt-shaped image, and
wherein the first belt-shaped image is displayed for a first user touch of the belt-shaped image, and the second belt-shaped image is displayed for a second user touch of the belt-shaped image.

10. The AV processing method according to claim 9,
wherein the portable music player plays tunes that are recorded on an internal storage device, allowing them to be listened to at will on the portable music player, while at the same time accepting a plurality of predetermined commands from the AV processing device, executing each processing in response to each command, and returning the processing result to the AV processing device, and
wherein the AV list is a list relating to the tunes that are recorded on the internal storage device in the portable music player.

## Patentansprüche

1. AV-Verarbeitungsvorrichtung, die mit einem tragbaren Musikabspielgerät kommunikativ verbunden ist, wobei die AV-Verarbeitungsvorrichtung umfasst:
eine Listenteilanzeigeeinrichtung zum Zuordnen serieller Nummern zu N Elementen, die eine AV-Liste bilden, die zu Musikmelodien gehört, die auf einer internen Speichereinrichtung des tragbaren Musikabspielgeräts aufgezeichnet sind, und zum Anzeigen von N1 seriell nummerierten Elementen der Elemente als Listenteil auf einer Berührungsanzeige, mit N 1 kleiner N;
eine Einrichtung zur Anzeige eines bandförmigen Bildes zwecks Verwendung eines bandförmigen Bildes, um die Reihenfolge der seriell nummerierten Elemente und eine relative Position einer Nummer einer Melodie, die gerade abgespielt wird, darzustellen, wobei das bandförmige Bild Teilstriche in Richtung der Achse desselben in regelmäßigen Intervallen aufweist;
eine Berührungspositionserfassungseinrichtung zum Erfassen einer Benutzerberührungsposition auf dem bandförmigen Bild;
eine Berührungsentsprechungsnummerberechnungseinrichtung zum Berechnen einer der Benutzerberührungsposition zugeordneten Nummer in Übereinstimmung mit der Benutzerberührungsposition und N als Berührungsentsprechungsnummer; und
eine Änderungsanweisungseinrichtung zum Anweisen der Listenteilanzeigeeinrichtung, den angezeigten Listenteil zu einem Listenteil zu ändern, der sich auf das Element der N1 seriellen Nummern einschließlich der Berührungsentsprechungsnummer bezieht,
wobei das bandförmige Bild ein erstes und ein zweites bandförmiges Bild mit einer Mehrzahl von Teilen in der Ausdehnungsrichtung derselben beinhaltet, wobei alle N Elemente dem ersten bandförmigen Bild zugeordnet sind, hingegen lediglich die Elemente mit einer Nummer, die einem vorgegebenen Bereich einschließlich der Benutzerberührungsposition im ersten bandförmigen Bild zugeordnet ist, dem zweiten bandförmigen Bild zugeordnet werden, und
wobei die Berührungspositionserfassungseinrichtung die Einrichtung zur Anzeige eines bandförmigen Bildes so steuert, dass diese das erste bandförmige Bild für eine erste Benutzerberührung des bandförmigen Bildes anzeigt, und das zweite bandförmige Bild für eine zweite Benutzerberührung des bandförmigen Bildes anzeigt.

2. AV-Verarbeitungsvorrichtung nach Anspruch 1, wobei die Einrichtung zur Anzeige eines bandförmigen Bildes eine aktuelle Nummernpositionsmarkierung an einer Position anzeigt, die der Nummer des Elements entspricht, das gerade auf dem bandförmigen Bild ausgewählt ist, wobei die Länge der aktuellen Nummernpositionsmarkierung in der Ausdehnungsrichtung des bandförmigen Bildes mit Größerwerden von N abnimmt.

3. AV-Verarbeitungsvorrichtung nach Anspruch 1, wobei die Anzahl der Teilstriche mit Größerwerden von N zunimmt.

4. AV-Verarbeitungsvorrichtung nach Anspruch 1, wobei die AV-Liste eine Liste ist, die sich auf Melodien bezieht, die auf einer internen Festplatteneinrichtung aufgezeichnet sind.

5. AV-Verarbeitungsvorrichtung nach Anspruch 1, wobei das tragbare Musikabspielgerät Melodien abspielt, die auf einer internen Speichereinrichtung aufgezeichnet sind, wobei es ermöglicht, dass diese nach Belieben auf dem tragbaren Musikabspielgerät angehört werden, gleichzeitig eine Mehrzahl vorgegebener Befehle aus der AV-Verarbeitungsvorrichtung annimmt, jede Verarbeitung in Reaktion auf jeden Befehl ausführt, und das Verarbeitungsergebnis an die AV-Verarbeitungsvorrichtung rückführt, und
wobei die AV-Liste eine Liste ist, die sich auf die Melodien bezieht, die auf der internen Speichereinrichtung im tragbaren Musikabspielgerät aufgezeichnet sind.

6. AV-Verarbeitungsvorrichtung nach Anspruch 5, die weiterhin umfasst:
eine Sende-/Empfangseinrichtung zum Senden, an das tragbare Musikabspielgerät, eines Gesamtzahlinformationsanforderungsbefehls, wodurch das tragbare Musikabspielgerät der AV-Verarbeitungsvorrichtung mit Informationen bezüglich der Gesamtzahl N antwortet, und eines Listenteilinformationsanforderungsbefehls, wodurch das tragbare Musikabspielgerät der AV-Verarbeitungsvorrichtung mit Listenteilinformationen antwortet, die sich auf das Element der N1 seriellen Nummern einschließlich der Berührungsentsprechungsnummer beziehen, und zum Empfangen der Antworten auf die Befehle aus dem tragbaren Musikabspielgerät;
wobei die Berührungsentsprechungsnummerberechnungseinrichtung die Sende-/Empfangseinrichtung veranlasst, den Gesamtzahlinformationsanforderungsbefehl zu senden und N auf Grundlage der Antwort auf den Gesamtzahlinformationsanforderungsbefehl aus dem tragbaren Musikabspielgerät zu erhalten; und
wobei die Listenteilanzeigeeinrichtung auf die Änderungsanweisung aus der Änderungsanweisungseinrichtung reagiert, die Sende-/Empfangseinrichtung zu veranlassen, den Listenteilinformationsanforderungsbefehl bezüglich des Listenteils, der die sich auf die Benutzerberührungsposition beziehende Nummer einschließt, zu senden, und den Listenteil auf Grundlage von Antwortinformationen auf den Listenteilinformationsanforderungsbefehl aus dem tragbaren Musikabspielgerät zu ändern.

7. AV-Verarbeitungsvorrichtung nach Anspruch 1, wobei das Element der Titel einer Melodie oder der Name einer Kategorie ist, in die die Melodien eingeteilt sind.

8. AV-Verarbeitungsvorrichtung nach Anspruch 1, wobei das bandförmige Bild ein bandförmiges Bild mit zwei Enden ist, wovon ein Ende eine Bezugsposition ist, oder ein schleifenförmiges bandförmiges Bild, in dem eine vorgegebene Umlaufrichtungsposition eine Bezugsposition ist.

9. AV-Verarbeitungsverfahren, das von einer AV-Verarbeitungsvorrichtung durchzuführen ist, die mit einem tragbaren Musikabspielgerät kommunikativ verbunden ist, wobei das AV-Verarbeitungsverfahren die Schritte umfasst:
Zuordnen serieller Nummern zu N Elementen, die eine AV-Liste bilden, die zu Musikmelodien gehört, die auf einer internen Speichereinrichtung des tragbaren Musikabspielgeräts aufgezeichnet sind, und Anzeigen von N1 seriell nummerierten Elementen der Elemente als Listenteil auf einer Berührungsanzeige, mit N1 kleiner N;
Verwenden eines bandförmigen Bildes, um die Reihenfolge der seriell nummerierten Elemente und eine relative Position einer Nummer einer Melodie, die gerade abgespielt wird, darzustellen, wobei das bandförmige Bild Teilstriche in Richtung der Achse desselben in regelmäßigen Intervallen aufweist;
Berührungspositionserfassen zum Erfassen einer Benutzerberührungsposition auf dem bandförmigen Bild; und
Berechnen einer der Benutzerberührungsposition zugeordneten Nummer in Übereinstimmung mit der Benutzerberührungsposition und N als Berührungsentsprechungsnummer; und Ändern des auf der Berührungsanzeige angezeigten Listenteils zu einem Listenteil, der sich auf das Element der N1 seriellen Nummern einschließlich der berechneten Berührungsentsprechungsnummer bezieht,
wobei das bandförmige Bild ein erstes und ein zweites bandförmiges Bild mit einer Mehrzahl von Teilen in der Ausdehnungsrichtung derselben beinhaltet, wobei alle N Elemente dem ersten bandförmigen Bild zugeordnet sind, hingegen lediglich die Elemente mit einer Nummer, die einem vorgegebenen Bereich einschließlich der Benutzerberührungsposition im ersten bandförmigen Bild zugeordnet ist, dem zweiten bandförmigen Bild zugeordnet werden, und
wobei das erste bandförmige Bild für eine erste Benutzerberührung des bandförmigen Bildes angezeigt wird, und das zweite bandförmige Bild für eine zweite Benutzerberührung des bandförmigen Bildes angezeigt wird.

10. AV-Verarbeitungsverfahren nach Anspruch 9, wobei das tragbare Musikabspielgerät Melodien abspielt, die auf einer internen Speichereinrichtung aufgezeichnet sind, wobei es ermöglicht, dass diese nach Belieben auf dem tragbaren Musikabspielgerät angehört werden, gleichzeitig eine Mehrzahl vorgegebener Befehle aus der AV-Verarbeitungsvorrichtung annimmt, jede Verarbeitung in Reaktion auf jeden Befehl ausführt, und das Verarbeitungsergebnis an die AV-Verarbeitungsvorrichtung rückführt, und
wobei die AV-Liste eine Liste ist, die sich auf die Melodien bezieht, die auf der internen Speichereinrichtung im tragbaren Musikabspielgerät aufgezeichnet sind.

## Revendications

1. Dispositif de traitement audiovisuel (AV) relié de manière à communiquer avec un lecteur de musique portatif, le dispositif de traitement AV comprenant :
un moyen d'affichage d'une partie de liste destiné à affecter des numéros de série à N éléments constituant une liste AV associée à des morceaux musicaux enregistrés dans un dispositif de mémoire interne du lecteur de musique portatif, et à afficher N1 éléments pourvus d'un numéro de série parmi les éléments sous la forme d'une partie de liste sur un écran tactile, en sachant que N1 est inférieur à N ;
un moyen d'affichage d'image en forme de bande destiné à utiliser une image en forme de bande pour représenter l'ordre des éléments pourvus d'un numéro de série et une position relative d'un nombre d'un morceau musical en cours de lecture, l'image en forme de bande présentant des marques de graduation dans le sens de son axe à des intervalles réguliers ;
un moyen de détection de position de contact tactile destiné à détecter la position de contact tactile d'un utilisateur sur l'image en forme de bande ;
un moyen de calcul de nombre de correspondance de contact tactile destiné à calculer un nombre affecté à la position de contact tactile d'un utilisateur conformément à la position de contact tactile d'un utilisateur et N en tant que nombre de correspondance de contact tactile ; et
un moyen d'instruction de modification destiné à donner l'instruction au moyen d'affichage de partie de liste de modifier la partie de liste affichée en une partie de liste en rapport avec l'élément des N1 numéros de série comprenant le nombre de correspondance de contact tactile,
dans lequel l'image en forme de bande comprend des première et deuxième images en forme de bande présentant une pluralité de divisions dans le sens de leur prolongement, la totalité des N éléments étant affectés à la première image en forme de bande, par ailleurs, seuls les éléments présentant un nombre affecté à une zone prédéterminée, comprenant la position de contact tactile d'un utilisateur dans la première image en forme de bande, sont affectés à la deuxième image en forme de bande, et
dans lequel le moyen de détection de position de contact tactile commande au moyen d'affichage d'image en forme de bande d'afficher la première image en forme de bande pour un premier contact tactile d'un utilisateur de l'image en forme de bande, et d'afficher la deuxième image en forme de bande pour un deuxième contact tactile d'un utilisateur de l'image en forme de bande.

2. Dispositif de traitement AV selon la revendication 1, dans lequel le moyen d'affichage d'image en forme de bande sert à afficher une marque de position au nombre actuel en une position correspondant au nombre de l'élément qui est actuellement sélectionné sur l'image en forme de bande, la longueur de la marque de position au nombre actuel dans le sens du prolongement de l'image en forme de bande s'amenuisant au fur et à mesure que N augmente.

3. Dispositif de traitement AV selon la revendication 1, dans lequel le nombre de marques de graduation augmente au fur et à mesure que N augmente.

4. Dispositif de traitement AV selon la revendication 1, dans lequel la liste AV est une liste en rapport avec des morceaux musicaux enregistrés sur un dispositif de disque dur interne.

5. Dispositif de traitement AV selon la revendication 1, dans lequel le lecteur de musique portatif lit des morceaux musicaux enregistrés sur un dispositif de mémoire interne, permettant une écoute à volonté à l'aide du lecteur de musique portatif, tandis qu'il peut accepter en même temps une pluralité de commandes prédéterminées en provenance du dispositif de traitement AV, en exécutant chaque traitement en réponse à chaque commande et en renvoyant le résultat du traitement au dispositif de traitement AV, et
dans lequel la liste AV est une liste en rapport avec les morceaux musicaux enregistrés sur le dispositif de mémoire interne du lecteur de musique portatif.

6. Dispositif de traitement AV selon la revendication 5, comprenant en outre :
un moyen d'émission/réception destiné à envoyer au lecteur de musique portatif une commande de requête d'informations relatives au nombre total moyennant laquelle le lecteur de musique portatif répond au dispositif de traitement AV en lui envoyant des informations en rapport avec le nombre total N, et une commande de requête d'informations relatives à la partie de liste moyennant laquelle le lecteur de musique portatif envoie au dispositif de traitement AV des informations de partie de liste en rapport avec l'élément des N1 numéros de série comprenant le nombre de correspondance de contact tactile, et destinés à recevoir les réponses aux commandes émises par le lecteur de musique portatif ;
dans lequel le moyen de calcul de nombre de correspondance de contact tactile amène le moyen d'émission/réception à envoyer la commande de requête d'informations relatives au nombre total et à obtenir N en fonction de la réponse à la commande de requête d'informations relatives au nombre total fournie par le lecteur de musique portatif ; et
dans lequel le moyen d'affichage de partie de liste répond à l'instruction de modification émise par le moyen d'instruction de modification pour amener le moyen d'émission/réception à envoyer la commande de requête d'informations relatives à la partie de liste en rapport avec la partie de liste comprenant le nombre en rapport avec la position de contact tactile d'un utilisateur et pour modifier la partie de liste en fonction de les informations de réponse à la commande de requête d'informations relatives à la partie de liste fournies par le lecteur de musique portatif.

7. Dispositif de traitement AV selon la revendication 1, dans lequel l'élément est le titre d'un morceau musical ou le nom d'une des catégories dans lesquelles les morceaux musicaux sont divisés.

8. Dispositif de traitement AV selon la revendication 1, dans lequel l'image en forme de bande est une image en forme de bande présentant deux extrémités dont une extrémité est une position de référence, ou une image en forme de bande sans fin dans laquelle une position prédéterminée dans la direction circulaire est une position de référence.

9. Procédé de traitement AV pouvant être mis en oeuvre par un dispositif de traitement AV relié de manière à communiquer avec un lecteur de musique portatif, le procédé de traitement AV comprenant les étapes consistant à :
affecter des numéros de série à N éléments constituant une liste AV associée à des morceaux musicaux enregistrés dans un dispositif de mémoire interne du lecteur de musique portatif, et
afficher N1 éléments pourvus d'un numéro de série parmi les éléments sous la forme d'une partie de liste sur un écran tactile, en sachant que N1 est inférieur à N ;
utiliser une image en forme de bande pour représenter l'ordre des éléments pourvus d'un numéro de série et une position relative d'un nombre d'un morceau musical en cours de lecture, l'image en forme de bande présentant des marques de graduation dans le sens de son axe à des intervalles réguliers ;
détecter la position de contact tactile pour détecter la position de contact tactile d'un utilisateur sur l'image en forme de bande ;
calculer un nombre affecté à la position de contact tactile d'un utilisateur conformément à la position de contact tactile d'un utilisateur et N en tant que nombre de correspondance de contact tactile ; et modifier la partie de liste affichée sur l'écran tactile en une partie de liste en rapport avec l'élément des N1 numéros de série comprenant le nombre de correspondance de contact tactile,
dans lequel l'image en forme de bande comprend des première et deuxième images en forme de bande présentant une pluralité de divisions dans le sens de leur prolongement, la totalité des N éléments étant affectés à la première image en forme de bande, par ailleurs, seuls les éléments présentant un nombre affecté à une zone prédéterminée, comprenant la position de contact tactile d'un utilisateur dans la première image en forme de bande, sont affectés à la deuxième image en forme de bande, et
dans lequel l'image en forme de bande est affichée pour un premier contact tactile d'un utilisateur de l'image en forme de bande, et la deuxième image en forme de bande est affichée pour un deuxième contact tactile d'un utilisateur de l'image en forme de bande.

10. Procédé de traitement AV selon la revendication 9,
dans lequel le lecteur de musique portatif lit des morceaux musicaux enregistrés sur un dispositif de mémoire interne, permettant une écoute à volonté à l'aide du lecteur de musique portatif, tandis qu'il peut accepter en même temps une pluralité de commandes prédéterminées en provenance du dispositif de traitement AV, en exécutant chaque traitement en réponse à chaque commande et en renvoyant le résultat du traitement au dispositif de traitement AV, et
dans lequel la liste AV est une liste en rapport avec les morceaux musicaux enregistrés sur le dispositif de mémoire interne du lecteur de musique portatif.
